# EUROPÄISCHE PATENTANMELDUNG

(11) **EP 1 845 368 A1**
(43) Veröffentlichungstag der Anmeldung: **17.10.2007**
(21) Anmeldenummer: 07003271.9
(22) Anmeldetag: 16.02.2007
(51) Int. Cl.: G01N 21/89

(54) **Verfahren und Vorrichtung zum Bestimmen der Soll-Position eines Trennschnitts zwischen plattenförmigen Werkstücken**

(30) Priorität: 15.04.2006 DE 102006017787
(71) Anmelder: Robert Bürkle GmbH, 72250 Freudenstadt (DE)
(72) Erfinder: Poitinger, Michael, 72270 Baiersbronn (DE); Storz, Markus, 72160 Horb (DE)
(74) Vertreter: Kaiser, Magnus

(57) **Zusammenfassung**

Die Erfindung betrifft ein Verfahren zum Bestimmen der Soll-Position eines Trennschnitts zwischen plattenförmigen Werkstücken (3',3"), auf die eine mehrere Werkstücke in Reihe überdeckende Folie (4) aufkaschiert worden ist, wobei die mittels der aufkaschierten Folie zusammenhängenden Werkstücke auf einer Förderstrecke zu einer Trennmaschine transportiert werden. Wesentlich ist dass die Werkstücke im Bereich eines an der Förderstrecke angeordneten Sensors (9) auf einer gekrümmten Bahn transportiert werden, deren Krümmungsradius an derjenigen Seite der Werkstücke, auf der die Folie (4) aufkaschiert ist, kleiner ist als an der dieser Seite gegenüberliegenden Unterseite (7) der Werkstücke, so dass sich beim Durchlaufen der gekrümmten Bahn an der Unterseite der Werkstücke zwischen den einzelnen Werkstücken jeweils ein Spalt (8) öffnet, der vom Sensor erkannt und zum Bestimmen der Soll-Position des Trennschnitts verwendet wird.

## Beschreibung

Die Erfindung betrifft ein Verfahren zum Bestimmen der Soll-Position eines Trennschnitts zwischen plattenförmigen Werkstücken, auf die eine mehrere Werkstücke in Reihe überdeckende Folie aufkaschiert worden ist, sowie eine Vorrichtung zur Durchführung des Verfahrens nach den Oberbegriffen der Ansprüche 1 und 7.

Plattenförmige Werkstücke, insbesondere Holzwerkstoffplatten, die zur Aufwertung der Nutzoberfläche mit einer Folie oder teilweise auch mit Papier kaschiert werden, sind oft regelmäßig, meist rechteckig geformt. Dementsprechend werden sie herkömmlicherweise kosteneffizient mit einer endlosen Folie kontinuierlich kaschiert. Hierzu werden die Werkstücke Stoß an Stoß in Reihe hintereinander durch eine Kaschieranlage gefördert, in welcher die Folie endlos auf die Werkstückreihe aufkaschiert wird.

Die Werkstück-Reihe wird kontinuierlich durch die Kaschieranlage transportiert und danach, nach Durchlaufen einer anschließenden definierten Förderstrecke, in eine Trennmaschine gefördert; denn nach dem Aufkaschieren der endlosen Folie hängen die einzelnen Werkstücke an der allen gemeinsamen Kaschierfolie zusammen und müssen dementsprechend mittels Durchtrennen der Kaschierfolie an den Stößen zwischen den einzelnen Werkstücken mit einer Trennmaschine vereinzelt werden.

Bei präzise arbeitenden Kaschieranlagen ist das Vereinzeln mitunter jedoch schwierig. Denn wenn die Werkstücke exakt Stoß an Stoß liegen und mit der aufkaschierten Folie versehen sind, ist es kaum möglich, die Stoßkanten sensorisch zu erfassen, um den Trennschnitt an der richtigen Stelle zu setzen. Dementsprechend aufwendig gestaltet sich im Allgemeinen die Erkennung der Stoßkanten zwischen den einzelnen Werkstücken auf der Förderstrecke zwischen der Kaschieranlage und der Trennmaschine.

Der vorliegenden Erfindung liegt daher die Aufgabe zugrunde, die sensorische Erkennung der Stoßkanten zwischen den einzelnen, über eine endlose Kaschierfolie verbundenen plattenförmigen Werkstücken und damit die Bestimmung der Sollposition des Trennschnitts zwischen den jeweiligen Werkstücken zu vereinfachen, ohne Abstriche bei der Präzision machen zu müssen.

Diese Aufgabe ist gelöst durch ein Verfahren mit den Merkmalen des Anspruchs 1 und eine Vorrichtung mit den Merkmalen des Anspruchs 7.

Bevorzugte Ausgestaltungen des Verfahrens ergeben sich aus den Ansprüchen 2 bis 6. Bevorzugte Weiterbildungen der der Vorrichtung sind in den Ansprüchen 8 bis 10 niedergelegt.

Erfindungsgemäß wird also die an der endlos aufkaschierten Folie zusammenhängende Reihe von plattenförmigen Werkstücken auf der Förderstrecke zwischen der Kaschieranlage und der Trennmaschine im Bereich einer Sensoranordnung entlang einer gekrümmten Bahn transportiert, wobei die Krümmung so orientiert ist, dass der Krümmungsradius an derjenigen Seite der Werkstücke, auf der die Folie aufkaschiert ist, kleiner ist als an der dieser Seite gegenüberliegenden Unterseite der Werkstücke. Hierdurch öffnet sich beim Durchlaufen der gekrümmten Bahn an der Unterseite der Werkstücke zwischen den einzelnen Werkstücken jeweils ein Spalt, der vom Sensor leicht und zuverlässig erkannt werden kann, und der dann zum Bestimmen der Sollposition des Trennschnitts verwendet wird. Der Begriff "Unterseite der Werkstücke" wird hier nur zur Unterscheidung von derjenigen Seite der Werkstücke verwendet, auf der die Folie aufkaschiert ist, und es soll damit definiert werden, dass die "Unterseite" der "Folienseite" gegenüberliegt; es soll damit jedoch nicht ausgesagt werden, dass die Unterseite in jedem Fall gegenständlich unten liegen muss. Es ist vielmehr auch eine Vertauschung von unten und oben denkbar, oder auch ein stehender Transport der Werkstücke auf der Förderstrecke.

Erfindungsgemäß werden die plattenförmigen Werkstücke also an der Seite, an der sie nicht wegen der aufkaschierten Folie untereinander verbunden sind, aufgefächert bzw. gespreizt, um den entstehenden Spalt in jedem Fall für einen Sensor erkennbar zu machen. Solch ein Sensor kann ein handelsüblicher Abstandssensor sein, beispielsweise ein Laser-Abstandsmessgerät. Besonders bevorzugt ist jedoch die Verwendung eines optischen Detektors mit Grauwertsprung-Erkennung, also insbesondere einer digitalen Kamera. Damit diese nicht durch die Maserung von etwa verwendeten Holzwerkstoffplatten irritiert wird, wird sie so eingerichtet, dass die von ihr aufgenommenen Bilder überbelichtet sind. Auf diese Weise verschwimmen die Strukturen der Werkstückoberfläche, und nur der geöffnete Spalt zwischen den einzelnen Werkstücken bleibt für die digitale Kamera erkennbar.

Die erfindungsgemäß verwendete gekrümmte Bahn zum Transport der Werkstücke an der Sensoranordnung vorbei muss nicht unbedingt in der Ebene der Förderstrecke liegen; es sind vielmehr unterschiedlichste Verläufe von gekrümmten Bahnen vorstellbar, die im Rahmen der Erfindung solange anwendbar sind, solange die Bedingung erfüllt wird, dass der Krümmungsradius an der Seite mit der aufkaschierten Folie kleiner ist als derjenige an der Unterseite der Werkstücke. Denn so ist gewährleistet, dass sich an der Unterseite der Werkstücke zwischen den einzelnen Werkstücken ein sensorisch leicht erkennbarer Spalt öffnet.

Das sensorische Erkennen des genannten Spalts, und somit der Trennfugen zwischen den einzelnen Werkstoffplatten, ermöglicht in der Trennmaschine, die auf die Förderstrecke mit der erfindungsgemäßen Sensoranordnung folgt, hochgenaue Schnitte. Hierzu wird das Signal, das die Sensoranordnung generiert, sobald ein erfindungsgemäß geöffneter Spalt zwischen zwei zu vereinzelnden Werkstücken die Sensoranordnung passiert, mit einer Verzögerung versehen, die der Zeitdauer entspricht, welche die Werkstücke zum Zurücklegen des Weges von der Sensoranordnung bis zur Trennmaschine benötigen. Sodann wird das Signal zum Triggern der Trennmaschine verwendet, so dass diese dann den Trennschnitt punktgenau zwischen zwei an der Kaschierfolie zusammenhängende Werkstücke setzen kann.

Die erfindungsgemäß vorgesehene gekrümmte Bahn für die Werkstückreihe mit bereits aufkaschierter Endlos-Folie kann sehr einfach erzeugt werden, und zwar beispielsweise mittels einer Auslenkung der zusammenhängenden Werkstücke zur Unterseite der Werkstücke hin.

Ein Ausführungsbeispiel für die erfindungsgemäße Vorrichtung wird im Folgenden anhand der einzigen beigefügten Zeichnung näher erläutert und beschrieben:

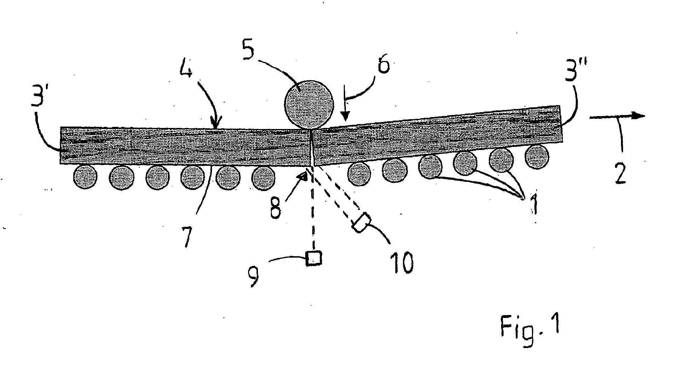

In der Zeichnung wird schematisch derjenige Teil eines Ausführungsbeispiels für eine erfindungsgemäße Vorrichtung gezeigt, in dem die Spalterkennung erfolgt. Auf einer als Rollenbahn ausgebildeten Fördervorrichtung 1 wird in Bewegungsrichtung 2 eine Stoß auf Stoß aneinanderliegende Reihe von Werkstücken 3 zu einer (nicht dargestellten) Trennmaschine transportiert. Die Werkstücke 3 sind, wie durch die Maserung in der Figur angedeutet, Holzwerkstoffplatten. Auf ihrer Oberseite befindet sich eine Folie 4, die endlos in einer (ebenfalls nicht dargestellten) Kaschieranlage aufkaschiert worden ist. Dementsprechend hängen die beiden dargestellten plattenförmigen Werkstücke 3' und 3" an ihrer Oberseite aufgrund der durchgehend aufgebrachten Kaschierfolie 4 zusammen. Es sei angemerkt, dass die beiden dargestellten Werkstücke 3' und 3" nur ein Ausschnitt einer längeren Reihe von aneinanderliegenden und mit Folie 4 kaschierten Werkstücken 3 darstellen.

Eine Rolle 5, die in Richtung des Pfeiles 6 auf die Werkstücke 3 drückt, erzielt nun im Zusammenwirken mit einer entsprechenden Anordnung der Förderrollen der Fördervorrichtung 1 die erfindungsgemäße gekrümmte Bahn der Transportbewegung der Werkstücke 3, indem sie eine Durchbiegung der Werkstückreihe 3', 3" nach unten verursacht. Wie dargestellt, öffnet sich hierbei an der Unterseite 7 der Werkstücke 3 ein Spalt 8, da die von der Rolle 5 erzeugte gekrümmte Bahn einen Krümmungsradius aufweist, der an der Oberseite der Werkstücke 3, also an der Folie 4, einen kleineren Krümmungsradius aufweist, als an der Unterseite 7 der Werkstücke 3. Dieser Spalt 8 kann nun leicht von einer Sensoranordnung 9 detektiert werden, selbst bei hohen Durchsatzgeschwindigkeiten der Werkstücke 3. Hierzu enthält die Sensoranordnung 9 eine CCD-Kamera, und der Spalt 8 wird von einer Lampe 10 seitlich beleuchtet, so dass der Spalt 8 aufgrund einer Beschattung durch die Kante des Werkstücks 3" dunkel bleibt und ein entsprechend starker Hell-Dunkel-Kontrast am Ort des Spaltes 8 entsteht.

Die Sensoranordnung 9 sendet dementsprechend in dem Moment, in dem der Spalt 8 erkannt wird, ein Signal an eine (nicht dargestellte) Maschinensteuerung, so dass diese in an sich bekannter Art und Weise aufgrund der bekannten Distanz vom Detektionsort der Sensoranordnung 9 bis zur Trennmaschine und anhand der ebenfalls bekannten Transportgeschwindigkeit der Werkstücke 3 den exakten Zeitpunkt errechnet, in dem der Trennschnitt gesetzt werden muss, um die Werkstücke 3' und 3" sauber voneinander zu trennen, und die Trennmaschine dementsprechend ansteuert.

Abschließend sei angemerkt, dass die in der Zeichnung gezeigte Durchbiegung der Werkstück-Reihe zur Verdeutlichung des erfindungsgemäßen Prinzips in übertriebenem Maße dargestellt ist. In der Praxis reicht eine verhältnismäßig geringe Auslenkung der Werkstücke 3 nach unten, um den Spalt 8 in der erforderlichen Breite zu spreizen, so dass er von der Sensoranordnung 9 sicher erkannt werden kann.

## Patentansprüche

1. Verfahren zum Bestimmen der Soll-Position eines Trennschnitts zwischen plattenförmigen Werkstücken, auf die eine mehrere Werkstücke in Reihe überdeckende Folie aufkaschiert worden ist, wobei die mittels der aufkaschierten Folie zusammenhängenden Werkstücke auf einer Förderstrecke zu einer Trennmaschine transportiert werden,
**dadurch gekennzeichnet,**
**dass** die Werkstücke im Bereich eines an der Förderstrecke angeordneten Sensors auf einer gekrümmten Bahn transportiert werden, deren Krümmungsradius an derjenigen Seite der Werkstücke, auf der die Folie aufkaschiert ist, kleiner ist als an der dieser Seite gegenüberliegenden Unterseite der Werkstücke, so dass sich beim Durchlaufen der gekrümmten Bahn an der Unterseite der Werkstücke zwischen den einzelnen Werkstücken jeweils ein Spalt öffnet, der vom Sensor erkannt und zum Bestimmen der Soll-Position des Trennschnitts verwendet wird.

2. Verfahren nach Anspruch 1,
**dadurch gekennzeichnet,**
**dass** die gekrümmte Bahn mittels einer Auslenkung der zusammenhängenden Werkstücke zur Unterseite der Werkstücke hin auf der Förderstrecke erzeugt wird.

3. Verfahren nach Anspruch 2,
**dadurch gekennzeichnet,**
**dass** die Auslenkung mittels einer Rolle oder dergleichen, die gegen die mit der aufkaschierten Folie versehenen Seite der Werkstücke drückt, erzeugt wird.

4. Verfahren nach mindestens einem der Ansprüche 1 bis 3,
**dadurch gekennzeichnet,**
**dass** als Sensor ein Abstandssensor verwendet wird.

5. Verfahren nach mindestens einem der Ansprüche 1 bis 3,
**dadurch gekennzeichnet,**
**dass** als Sensor ein optischer Detektor mit Grauwertsprung-Erkennung, insbesondere eine digitale Kamera verwendet wird.

6. Verfahren nach Anspruch 5,
**dadurch gekennzeichnet;**
**dass** die Kamera so eingestellt wird, dass die von ihr aufgenommenen Bilder überbelichtet sind, so dass die Struktur der Werkstückoberflächen nicht mehr erkennbar ist.

7. Vorrichtung zum Bestimmen der Soll-Position eines Trennschnitts zwischen plattenförmigen Werkstücken (3), auf die eine mehrere Werkstücke (3', 3") in Reihe überdeckende Folie (4) aufkaschiert worden ist, zur Durchführung des Verfahrens nach mindestens einem der Ansprüche 1 bis 6, umfassend eine Fördervorrichtung (1) mit einer Sensoranordnung (9) zum Detektieren eines Spalts (8) zwischen zwei aufeinanderfolgenden, mittels der aufkaschierten Folie (4) zusammenhängenden, auf der Fördervorrichtung (1) transportierten Werkstücken (3', 3"),
**dadurch gekennzeichnet,**
**dass** die Fördervorrichtung (1) so ausgestaltet ist, dass die Werkstücke (3) im Bereich der Sensoranordnung (9) auf einer gekrümmten Bahn transportiert werden, deren Krümmungsradius an derjenigen Seite der Werkstücke (3), auf der die Folie (4) aufkaschiert ist, kleiner ist als an der dieser Seite gegenüberliegenden Unterseite (7) der Werkstücke (3), so dass sich beim Durchlaufen der gekrümmten Bahn an der Unterseite (7) der Werkstücke (3) zwischen den einzelnen Werkstücken (3', 3") jeweils ein Spalt (8) öffnet, der von der Sensoranordnung (9) erkannt und zum Bestimmen der Sollposition des Trennschnitts verwendet wird.

8. Vorrichtung nach Anspruch 7,
**dadurch gekennzeichnet,**
**dass** im Bereich der Sensoranordnung (9) eine Rolle (5) angeordnet ist, die auf der Seite der Werkstücke (3), auf der die Folie (4) aufkaschiert ist, abrollt und eine Durchbiegung der an der aufkaschierten Folie (4) zusammenhängenden Werkstück-Reihe (3', 3") zur Unterseite der Werkstücke (3) hin verursacht.

9. Vorrichtung nach einem der Ansprüche 7 oder 8,
**dadurch gekennzeichnet,**
**dass** die Sensoranordnung (9) einen Abstandssensor enthält.

10. Vorrichtung nach einem der Ansprüche 7 oder 8,
**dadurch gekennzeichnet,**
**dass** die Sensoranordnung (9) einen optischen Sensor mit Grauwertsprung-Erkennung, insbesondere eine digitale Kamera enthält.
